# EUROPEAN PATENT SPECIFICATION

(11) **EP 2 317 731 B1**
(45) Date of publication and mention of the grant of the patent: **10.09.2014**
(21) Application number: 09806318.3
(22) Date of filing: 12.05.2009
(51) Int. Cl.: H04L 29/08, H04L 29/06

(54) **METHOD, SYSTEM AND DEVICE FOR REALIZING THE REPORTING OF MEDIA OPERATION INFORMATION**
VERFAHREN, SYSTEM UND VORRICHTUNG ZUM BERICHTEN VON MEDIENBETRIEBSINFORMATIONEN
PROCÉDÉ, SYSTÈME ET DISPOSITIF DE RÉALISATION DE COMPTE RENDU D INFORMATIONS SUR DES OPÉRATIONS DE MÉDIA

(30) Priority: 14.08.2008 CN 200810210461
(43) Date of publication of application: 04.05.2011
(73) Proprietor: Huawei Technologies Co., Ltd., Longgang District, Shenzhen Guangdong 518129 (CN)
(72) Inventor: LIN, Yangbo, Shenzhen Guangdong 518129 (CN)
(74) Representative: Epping - Hermann - Fischer
(86) International application number: PCT/CN2009/071764
(87) International publication number: WO 2010/017715

(56) References cited:
- WO-A2-02/054707
- CN-A- 1 892 654
- CN-A- 101 064 644
- CN-A- 101 212 645
- US-A1- 2007 234 306
- FOSTER F ANDREASEN CISCO SYSTEMS B: "Basic Media Gateway Control Protocol (MGCP) Packages; rfc3660.txt", 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JC TVC-SITE/, INTERNET ENGINEERING TASK FORCE, IETF, CH, 1 December 2003 (2003-12-01), XP015009441, ISSN: 0000-0003
- "Gateway control protocol: Enhanced digit collection packages and procedures; H.248.16 (11/02)", ITU-T STANDARD, INTERNATIONAL TELECOMMUNICATION UNION, GENEVA ; CH, no. H.248.16 (11/02), 29 November 2002 (2002-11-29), pages 1-18, XP017463656, [retrieved on 2003-04-11]
- "Gateway control protocol: Advanced media server packages; H.248.9 (01/05)", ITU-T STANDARD, INTERNATIONAL TELECOMMUNICATION UNION, GENEVA ; CH, no. H.248.9 (01/05), 8 January 2005 (2005-01-08), pages 1-60, XP017434648, [retrieved on 2005-05-26]
- "Gateway control protocol: Advanced media server packages; H.248.9 (2005) Amendment 1 (08/07)", ITU-T STANDARD, INTERNATIONAL TELECOMMUNICATION UNION, GENEVA ; CH, no. H.248.9 (2005) Amendment 1 (08/07), 29 August 2007 (2007-08-29), pages 1-42, XP017435647, [retrieved on 2008-03-27]

## Description

### FIELD OF THE INVENTION

The present invention relates to the field of network communication technologies, and in particular, to a method and a system for reporting media operation information, a control device, and a processing device.

### BACKGROUND OF THE INVENTION

Media Gateway Controller (MGC) and Media Gateway (MG) are two key components in a media resource server in a split architecture. The MGC is responsible for the service control function, and the MG is responsible for the media bearing function. In this way, the service control plane is separated from the media bearer plane, network resources are shared sufficiently, device upgrade and service extension are simplified, and the costs of development and maintenance are slashed.

Under control of the MGC, the MG can perform various operations for media, for example, play media to other devices or users, or record the media from other devices or users. A user may intervene in the process of the playing or recording, for example, the playing or recording may be completed by a user behavior such as on-hook operation; or the playing or recording needs to be adjusted according to an instruction input by the user.

Here is a typical scenario: When a service is underway in an Interactive Voice Response (IVR) system, the MG plays a voice to the user under the control of the MGC, indicating the user to select a menu. The user may select the menu before completion of playing the voice, for example, select the menu through Dual Tone Multi Frequency (DTMF) input. Therefore, the MG needs to report the user input to the MGC at the same time when the playing of the voice is interrupted, which facilitates the MGC to perform the next step, for example, play a voice prompt of selecting the next menu to the user.

After researching the prior art, the inventor of the present invention finds that as regards the media resource server in the split architecture in the prior art, when the MG performs a media operation under the control of the MGC, the MG cannot continue interacting with the user until the media operation is completed, and thus cannot respond or switch to a new media operation in time.

WO 02/054707 A2 discloses an enhanced media gateway control protocol and provides ECTF S.100-like functionality for H.248/Megaco-controlled media gateways and/or media servers.

Rfc 3660 discloses Basic Media Gateway Control Protocol (MGCP) packages.

H.248.16 (11/02) discloses a gateway control protocol: Enhanced digit collection packages and procedures.

H.248.9 (01105) discloses a gateway control protocol: Advanced media server packages.

H.248.9 (2005) Amendment 1 (08/07) discloses a gateway control protocol: Advanced media server packages.

### SUMMARY OF THE INVENTION

In order to improve efficiency of media operations, the embodiments of the present invention provide a method and a system for reporting media operation information, a control device, and a processing device. The technical solution under the present invention is as follows:
A method for reporting media operation information includes:
   receiving, by a Media Gateway, MG, control information sent by a Media Gateway Controller, MGC, wherein the control information is an instruction of detecting completion of a media operation, and the media operation refers to recording or playing a voice;
   detecting, by the MG, whether the media operation is complete according to the control information;
   when the MG detecting that the media operation is complete, judging, by the MG, whether completion of the media operation is caused by a user's intervention;
   if the completion of the media operation is caused by the user's intervention, reporting, by the MG, a media operation completion event and an "End Key" parameter of the event to the MGC, wherein the value of the "End Key" parameter of the event is Dual Tone Multiple Frequency, DTMF, key inputted by the user when the user intervenes in the media operation; wherein the parameter is carried in the media operation completion event; and
   if the completion of the media operation is not caused by the user's intervention, reporting, by the MG, a media operation completion event and no ek parameter of the event to the MGC, or reporting, by the MG, a media operation completion event and an "End Key" parameter to the MGC, wherein the value of the "End Key" parameter is null.

A system for reporting media operation information is provided in an embodiment of the present invention.

The system includes a Media Gateway and a Media Gateway Controller, where: a Media Gateway, MG (302), configured to: obtain control information from a Media Gateway Controller, MGC (301), wherein the control information is an instruction of detecting completion of a media operation, detect whether the media operation is complete according to the control information; when the MG detecting that the media operation is complete, judge whether completion of the media operation is caused by a user's intervention, if the completion of the media operation is caused by the user's intervention, report a media operation completion event and an "End Key" parameter of the event to the MGC, wherein the value of the "End Key" parameter of the event is Dual Tone Multiple Frequency, DTMF, key inputted by the user when the user intervenes in the media operation; wherein the parameter is carried in the media operation completion event, and if the completion of the media operation is not caused by the user's intervention, report a media operation completion event and no ek parameter of the event to the MGC, or report a media operation completion event and an "End Key" parameter to the MGC, wherein the value of the "End Key" parameter is null wherein the media operation refers to recording or playing a voice; and
the MGC (301), configured to receive the media operation completion event and the DTMF key reported by the MG (302).

A processing device provided in an embodiment of the present invention includes:
an obtaining module (501), configured to obtain control information sent by a Media Gateway Controller, MGC, wherein the control information is an instruction of detecting completion of a media operation, wherein the media operation refers to recording or playing a voice;
a detecting module (502), configured to detect whether the media operation is complete according to the control information obtained by the obtaining module (501);
a judging module (504), configured to judge whether completion of the media operation is caused by a user's intervention when the detecting module (502) detects that the media operation is complete; and
a reporting module (505), configured to report a media operation completion event and an "End Key" parameter of the event to the MGC if the judging module (504) determines that the completion of the media operation is caused by the user's intervention; wherein the value of the
"End Key" parameter of the event is Dual Tone Multiple Frequency, DTMF, key inputted by the user when the user intervenes in the media operation; wherein the parameter is carried in the media operation completion event; and report a media operation completion event and no ek parameter of the event to the MGC, or report a media operation completion event and an "End Key" parameter to the MGC if the judging module (504) determines that the completion of the media operation is not caused by the user's intervention, wherein the value of the "End Key" parameter is null;
wherein the processing device is a Media Gateway, MG.

In the embodiments of the present invention, when the user intervenes to complete the media operation, a mechanism, under which the MG reports to the MGC, is adopted. The MG reports a media operation completion event to the MGC, with the event carrying an End Key (ek) parameter. In this way, the MG reports the DTMF key input by the user and regarded as a cause for completing the media operation, and the MGC exercises subsequent control over the media service according to the DTMF key input by the user, thus meeting the requirement of the user intervening in the media operation and improving the user experience.

### BRIEF DESCRIPTION OF THE DRAWINGS

To make the technical solution under the present invention or in the prior art clearer, the following outlines the accompanying drawings involved in the description of the embodiments of the present invention. Apparently, the accompanying drawings outlined below are illustrative rather than exhaustive, and persons of ordinary skill in the art can derive other drawings from them without any creative effort.
FIG. 1 is a flowchart of a method for reporting a user's intervention in a media operation according to a first embodiment of the present invention;
FIG. 2 is a flowchart of a method for reporting a user's intervention in a media operation according to a second embodiment of the present invention;
FIG. 3 shows a structure of a system for reporting a user's intervention in a media operation according to a third embodiment of the present invention;
FIG. 4 shows a structure of a controlling device according to a fourth embodiment of the present invention; and
FIG. 5 shows a structure of a processing device according to a fifth embodiment of the present invention.

### DETAILED DESCRIPTION OF THE EMBODIMENTS

In order to make the technical solution, objectives, and merits of the present invention clearer, the following further describes the embodiments of the present invention in detail with reference to accompanying drawings. Evidently, the embodiments described herein are illustrative in nature rather than exhaustive. All other embodiments, which can be derived by those skilled in the art from the embodiments given herein without any creative effort, shall fall within the scope of the present invention.

Generally, an MGC sends a signal to the MG as an instruction of performing a media operation, and sends an event to the MG as an instruction of detecting completion of the media operation. In this embodiment, when a user intervenes to complete the media operation, the MG reports a media operation completion event to the MGC. The event is extended to carry a new parameter named "End Key", which is identified as "ek". The ek parameter is a string, and its value indicates the DTMF input key that leads to completion of the media operation.

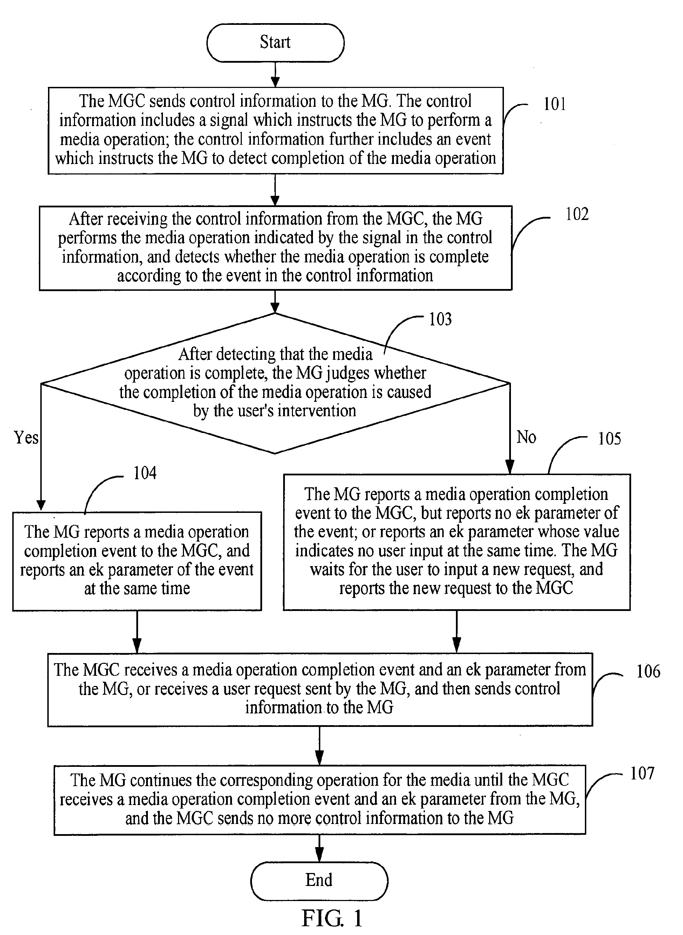

As shown in FIG. 1, the method in this embodiment includes the following steps:
101. The MGC sends control information to the MG. The control information includes a signal which instructs the MG to perform a media operation, for example, play or record a voice. The control information further includes an event which instructs the MG to detect completion of the media operation.

The control exercised by the MGC over the MG may be specific to a termination or stream on the termination. Therefore, the control information is applicable to stream or termination. The termination may be a specific termination in the MG, or a root termination representative of the whole MG.

In this embodiment, the media operation may be completed naturally or terminated by the user's intervention. For example, at the time of playing a prompt voice, the prompt voice is completed naturally, or the user intervenes to terminate the voice, both being known as completion of the prompt voice.
102. After receiving the control information from the MGC, the MG performs the media operation indicated by the signal in the control information, and detects whether the media operation is complete according to the event in the control information.

The control information may be sent by the MGC to the MG, and may also be preset in the MG as required; the effects achieved by the two methods are the same. In this embodiment, it is assumed that the MGC sends control information to the MG.
103. After detecting that the media operation is complete, the MG judges whether the completion of the media operation is caused by the user's intervention. If the completion of the media operation is caused by the user's intervention, the process proceeds to step 104; if the completion of the media operation is not caused by the user's intervention, the process proceeds to step 105.
104. The MG reports a media operation completion event to the MGC, and reports an ek parameter of the event at the same time. The value of this parameter is the DTMF key input by the user. The process proceeds to step 106.
105. The MG reports a media operation completion event to the MGC, but reports no ek parameter of the event; or reports an ek parameter whose value indicates no user input at the same time, for example, reports "ek="" " (namely, the parameter ek is null), indicating that the user makes no DTMF input. Meanwhile, the MG waits for the user to input a new request. After receiving the new user request, the MG reports the request to the MGC through an event, and then proceeds with the subsequent procedure.
106. After the MGC receives the media operation completion event and the ek parameter from the MG, or after the MGC receives the user request from the MG, the MGC sends further control information to the MG. The control information includes a signal instructing the MG to perform the media operation corresponding to the ek parameter or corresponding to the user request. The control information further includes an event, which instructs the MG to detect completion of the media operation.
107. The MG continues the corresponding operation for the media according to steps 102-106 until the MGC receives a media operation completion event and an ek parameter from the MG and the MGC sends no more control information to the MG.

In this embodiment, when the user intervenes to complete the media operation, the MG reports a media operation completion event to the MGC, with the event carrying an ek parameter. In this way, the MG reports the DTMF key input by the user and regarded as a cause for completing the media operation, and the MGC can exercise subsequent control over the media service according to the DTMF key input by the user, thus meeting the requirement of the user intervening in the media operation and improving the user experience.

### Embodiment 2

This embodiment gives more details of applying the technical solution under the present invention in a specific scenario:
The MGC controls the MG to provide services for user A. 12 menu options are available for selection by the user, and 10th option of them is about the service of leaving a message of recorded voice. In the service of leaving a message of recorded voice, the user can input "#" to finish the service.

Generally, the MGC sends a signal to the MG as an instruction of performing a media operation, and sends an event to the MG as an instruction of detecting completion of the media operation. For example, the operation of playing media is identified as "Playout", and the event of completion of playing media is identified as "PlayCom", the operation of voice recording is identified as "Record", and the event of completion of voice recording is identified as "RecdCom".

In this embodiment, when the user intervenes to complete the media operation, the MG reports a media operation completion event to the MGC. The event is extended to carry a new parameter named "End Key", which is identified as "ek". The ek parameter is a string, and its value indicates the DTMF input key that leads to completion of the media operation.

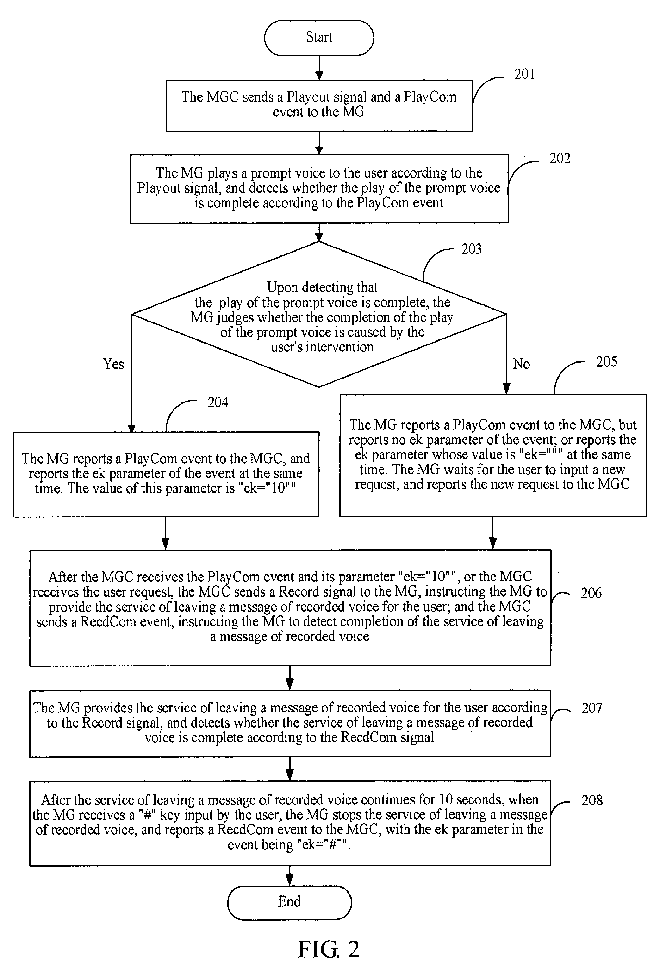

As shown in FIG. 2, the detailed process is as follows:
201. The MGC sends a Playout signal to the MG as an instruction of playing a prompt voice to the user, where the prompt voice asks the user to select a menu option (in this embodiment, the menu includes 12 options); and the MGC sends a PlayCom event to the MG as an instruction of detecting completion of playing the prompt voice triggered by the Playout signal.
202. After receiving the Playout signal and the PlayCom event from the MGC, the MG plays the prompt voice to the user according to the Playout signal, and detects whether the play of the prompt voice is complete according to the PlayCom event.
203. Upon detecting that the play of the prompt voice is complete, the MG judges whether the completion of play of the prompt voice is caused by the user's intervention. If the completion of play is caused by the user's intervention, the process proceeds to step 204; if the completion of play is not caused by the user's intervention, the process proceeds to step 205. In this embodiment, it is assumed that the user selects the 10th option of the menu through DTMF input, namely, selects a service of leaving a message of recorded voice.
204. The MG reports a PlayCom event to the MGC, and reports the ek parameter of the event at the same time. The value of this parameter is "ek=" 10"". The process proceeds to step 206.
205. The MG reports a PlayCom event to the MGC, but reports no ek parameter of the event; or reports the ek parameter whose value is "ek=""" at the same time, where ek="" (namely, the parameter ek is null) indicates that the user makes no DTMF input. Meanwhile, the MG waits for the user to input a new request. When the user requests to select option 10th of the menu through DTMF input, the MG reports the request to the MGC through an event, and then proceeds with the subsequent procedure.
206. After the MGC receives the PlayCom event and its parameter "ek="10"", or the MGC receives the user request sent by the MG as a request for using the service of leaving a message of recorded voice, the MGC sends a Record signal corresponding to the service of leaving a message of recorded voice to the MG, instructing the MG to provide the service of leaving a message of recorded voice for the user; and the MGC sends a RecdCom event, instructing the MG to detect completion of the service of leaving a message of recorded voice triggered by the Record signal.
207. After receiving the Record signal and the RecdCom event from the MGC, the MG provides the service of leaving a message of recorded voice for the user according to the Record signal, and detects whether the service of leaving a message of recorded voice is complete according to the RecdCom event.
208. After the service of leaving a message of recorded voice continues for a period, when the MG receives a "#" key input by the user as a request for completing the service of leaving a message of recorded voice, the MG stops the service of leaving a message of recorded voice, and reports a RecdCom event to the MGC, with the ek parameter in the event being "ek="#"".

The method in this embodiment is also applicable to a media resource server in a split architecture, namely, applicable to a scenario of reporting information about user's intervention in media operation between a media resource control device and a media resource processing device, or between a media control function device and a media delivery function device. In this case, the media control device or media control function device is equivalent to an MGC, and the media resource processing device or media delivery function device is equivalent to an MG.

In the method for reporting information about the user's intervention in media operation in this embodiment, when the user intervenes to complete the media operation, the MG reports a media operation completion event to the MGC, with the event carrying an ek parameter. In this way, the MG reports the DTMF key input by the user and regarded as a cause for completing the media operation, and the MGC can exercise subsequent control over the media service according to the DTMF key input by the user, thus meeting the requirement of the user intervening in the media operation and improving the user experience.

### Embodiment 3

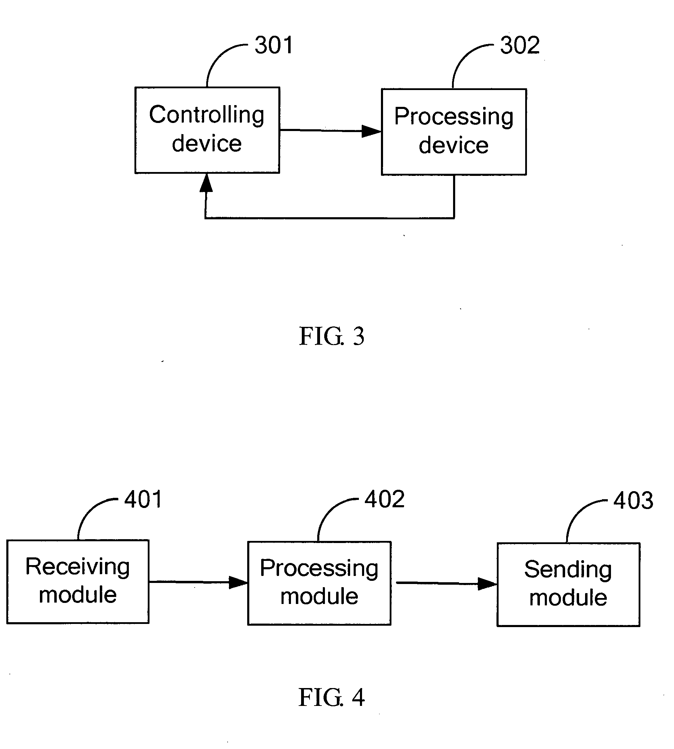

As shown in FIG. 3, a system for reporting information about a user's intervention in media operation is provided in an embodiment of the present invention. The system includes:
a controlling device 301, configured to send control information to a processing device as an instruction of detecting completion of a media operation, and receive information about a user's intervention in the media operation, where the information is reported by the processing device 302 and the user's intervention leads to the completion of the media operation; and
the processing device 302, configured to: obtain the control information which is the instruction of detecting the completion of the media operation, detect whether the media operation is complete according to the control information, and report the information about the user's intervention in the media operation to the controlling device 301 if the completion of the media operation is caused by the user's intervention when the completion of the media operation is detected.

The controlling device 301 may be an MGC, or a media resource control device, or a media control function device. The processing device 302 may be an MG, or a media resource processing device, or a media delivery function device.

Specifically, the control information may be sent by the controlling device to the processing device, and may also be preset in the processing device as required; the effects achieved by the two methods are the same.

Further, the controlling device 301 includes:
a sending module, configured to send control information to the processing device 302 as an instruction of detecting the completion of the media operation.

In this embodiment, when the user intervenes to complete the media operation, the processing device reports a media operation completion event to the controlling device. In this way, the controlling device can exercise subsequent control over the media service according to the user's intervention, thus meeting the requirement of the user intervening in the media operation and improving the user experience.

### Embodiment 4

As shown in FIG. 4, a controlling device provided in an embodiment of the present invention includes:
a receiving module 401, configured to receive information about a user's intervention in a media operation, where the information is reported by a processing device and the user's intervention leads to completion of the media operation; and
a sending module 403, configured to send control information to the processing device as an instruction of detecting the completion of the media operation.

The controlling device provided in this embodiment further includes:
a processing module 402, configured to generate the control information for controlling the processing device to perform media operation and detect completion of the media operation according to the received information about the user's intervention in the media operation.

The controlling device may be an MGC, or a media resource control device, or a media control function device. The processing device may be an MG, or a media resource processing device, or a media delivery function device.

In this embodiment, the sending module delivers control information to the processing device as an instruction of detecting completion of media operation, and the receiving module receives the information about the user's intervention in the media operation from the processing device, where the user's intervention leads to completion of the media operation. In this way, the controlling device can exercise subsequent control over the media service according to the user's intervention, thus meeting the requirement of the user intervening in the media operation and improving the user experience.

### Embodiment 5

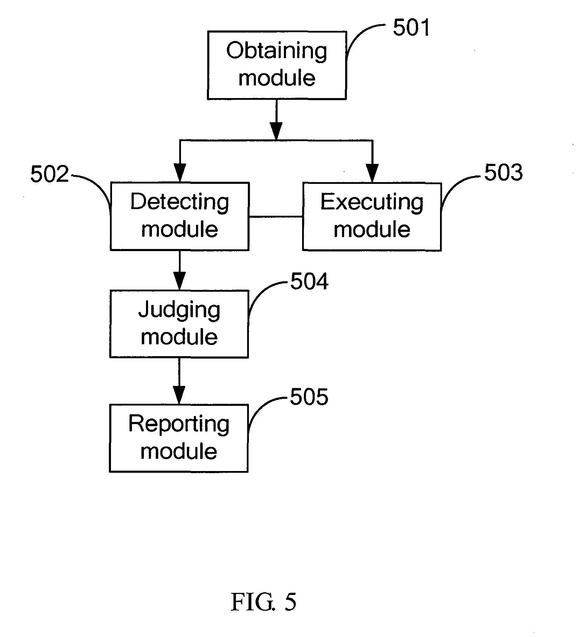

As shown in FIG. 5, a processing device provided in this embodiment includes:
an obtaining module 501, configured to receive control information sent by a controlling device as an instruction of detecting completion of a media operation, or obtain preset control information of detecting the completion of the media operation;
a detecting module 502, configured to detect whether the media operation is complete according to the control information;
a judging module 504, configured to judge whether completion of the media operation is caused by a user's intervention when the detecting module 502 detects that the media operation is complete; and
a reporting module 505, configured to: report information about the user's intervention in the media operation to the controlling device if the judging module 503 determines that the completion of the media operation is caused by the user's intervention when the detecting module 502 detects that the media operation is complete; or wait for the user to input a new request and report the new request to the controlling device through an event if the judging module 503 determines that the completion of the media operation is not caused by the user's intervention.

The processing device provided in this embodiment further includes:
an executing module 503, configured to perform the media operation indicated by the control information according to the control information.

The controlling device may be an MGC, or a media resource control device, or a media control function device. The processing device may be an MG, or a media resource processing device, or a media delivery function device.

In this embodiment, when the user intervenes to complete the media operation, the reporting module reports media operation completion to the controlling device and reports the end key corresponding to the media operation information input by the user. In this way, the controlling device can exercise subsequent control over the media service according to the user's intervention, thus meeting the requirement of the user intervening in the media operation and improving the user experience.

Persons of ordinary skill in the art should understand that all or a part of the steps of the method in the embodiments of the present invention may be implemented by a program instructing relevant hardware. The program may be stored in a computer readable storage medium. The storage medium may be a floppy disk, hard disk or CD-ROM.

## Claims

1. A method for reporting media operation information, comprising:
receiving, by a Media Gateway, MG, control information sent by a Media Gateway Controller, MGC, wherein the control information is an instruction of detecting completion of a media operation, and the media operation refers to recording or playing a voice;
detecting, by the MG, whether the media operation is complete according to the control information;
when the MG detects that the media operation is complete, judging, by the MG, whether completion of the media operation is caused by a user's intervention;
if the completion of the media operation is caused by the user's intervention, reporting, by the MG, a media operation completion event and an "End Key", ek, parameter of the event to the MGC, wherein the value of the "End Key" parameter of the event is Dual Tone Multiple Frequency, DTMF, key input by the user when the user intervenes in the media operation; wherein the parameter is carried in the media operation completion event; and
if the completion of the media operation is not caused by the user's intervention, reporting, by the MG, a media operation completion event and no ek parameter of the event to the MGC, or reporting, by the MG, a media operation completion event and an ek parameter to the MGC, wherein the value of the ek parameter is null.

2. The method according to claim 1, wherein:
the control information comprises an event in gateway control protocol

3. The method according to claim 2, wherein:
the control information is applied on a stream or a termination, and the termination is a specific termination in the MG or a root termination representative of the whole MG.

4. The method according to claim 1, wherein:
the control information is generated according to user request information or the DTMF key input by the user.

5. A system for reporting media operation information, comprising:
a Media Gateway, MG (302), configured to: obtain control information from a Media Gateway Controller, MGC (301), wherein the control information is an instruction of detecting completion of a media operation, detect whether the media operation is complete according to the control information; when the MG detects that the media operation is complete, judge whether completion of the media operation is caused by a user's intervention, if the completion of the media operation is caused by the user's intervention, report a media operation completion event and an "End Key", ek, parameter of the event to the MGC, wherein the value of the ek parameter of the event is Dual Tone Multiple Frequency, DTMF, key input by the user when the user intervenes in the media operation; wherein the parameter is carried in the media operation completion event; and if the completion of the media operation is not caused by the user's intervention, report a media operation completion event and no ek parameter of the event to the MGC, or report a media operation completion event and an ek parameter to the MGC, wherein the value of the ek parameter is null, wherein the media operation refers to recording or playing a voice; and
the MGC (301), configured to receive the media operation completion event and the DTMF key reported by the MG (302).

6. The system according to claim 5, wherein the MGC (301) further comprises:
a sending module, configured to send the control information to the MG (302) as an instruction of detecting completion of the media operation.

7. A processing device, comprising:
an obtaining module (501), configured to obtain control information sent by a Media Gateway Controller, MGC, wherein the control information is an instruction of detecting completion of a media operation, wherein the media operation refers to recording or playing a voice;
a detecting module (502), configured to detect whether the media operation is complete according to the control information obtained by the obtaining module (501);
a judging module (504), configured to judge whether completion of the media operation is caused by a user's intervention when the detecting module (502) detects that the media operation is complete; and
a reporting module (505), configured to report a media operation completion event and an "End Key", ek, parameter of the event to the MGC if the judging module (504) determines that the completion of the media operation is caused by the user's intervention, wherein the value of the ek parameter of the event is Dual Tone Multiple Frequency, DTMF, key input by the user when the user intervenes in the media operation; wherein the parameter is carried in the media operation completion event; and report a media operation completion event and no ek parameter of the event to the MGC, or report a media operation completion event and an ek parameter to the MGC if the judging module (504) determines that the completion of the media operation is not caused by the user's intervention, wherein the value of the ek parameter is null;
wherein the processing device is a Media Gateway, MG.

8. The processing device according to claim 7, further comprising:
an executing module (503), configured to perform the media operation indicated by the control information.

## Patentansprüche

1. Verfahren zum Berichten von Medienoperationsinformationen, das Folgendes umfasst:
Empfangen durch ein Medien-Gateway, MG, von Steuerinformationen, die durch eine Medien-Gateway-Steuereinheit (Media Gateway Controller, MGC) gesendet werden, wobei die Steuerinformationen eine Anweisung zum Detektieren der Beendigung einer Medienoperation sind und sich die Medienoperation auf das Aufzeichnen oder Abspielen von Sprache bezieht;
Detektieren durch das MG gemäß den Steuerinformationen, ob die Medienoperation beendet ist;
wenn das MG detektiert, dass die Medienoperation beendet ist, Beurteilen durch das MG, ob die Beendigung der Medienoperation durch einen Eingriff eines Anwenders verursacht wird;
falls die Beendigung der Medienoperation durch den Eingriff eines Anwenders verursacht wird, Berichten eines Medienoperationsbeendigungsereignisses und eines "End Key"-Parameters, ek-Parameters, des Ereignisses durch das MG zu der MGC,
wobei der Wert des "End Key"-Parameters des Ereignisses Mehrfrequenzwahlverfahren-Tasteneingabe (Dual Tone Multiple Frequency key input, DTMF-Tasteneingabe) durch den Anwender ist, wenn der Anwender in die Medienoperation eingreift; wobei der Parameter in dem Medienoperationsbeendigungsereignis geführt ist; und
falls die Beendigung der Medienoperation nicht durch den Eingriff eines Anwenders verursacht wird, Berichten eines Medienoperationsbeendigungsereignisses und keines ek-Parameters des Ereignisses durch das MG zu der MGC, oder Berichten eines Medienoperationsbeendigungsereignisses und eines ek-Parameters durch das MG zu der MGC, wobei der Wert des ek-Parameters Null ist.

2. Verfahren nach Anspruch 1, wobei:
die Steuerinformationen ein Ereignis im Gateway-Steuerungsprotokoll umfassen.

3. Verfahren nach Anspruch 2, wobei:
die Steuerinformationen auf einen Datenstrom oder einen Anschluss angewendet werden, und der Anschluss ein spezifischer Anschluss in dem MG ist oder ein Wurzel- Anschluss ist, der für das gesamte MG repräsentativ ist.

4. Verfahren nach Anspruch 1, wobei:
die Steuerinformationen gemäß Anwenderanforderungsinformationen oder der DTMF-Tasteneingabe durch den Anwender erzeugt werden.

5. System zum Berichten von Medienoperationsinformationen, das Folgendes umfasst:
ein Medien-Gateway, MG (302), das konfiguriert ist: Steuerinformationen von einer Medien-Gateway-Steuereinheit, MGC (301), zu erhalten, wobei die Steuerinformationen eine Anweisung zum Detektieren der Beendigung einer Medienoperation sind, gemäß den Steuerinformationen zu detektieren, ob die Medienoperation beendet ist; wenn das MG detektiert, dass die Medienoperation beendet ist, zu beurteilen, ob die Beendigung der Medienoperation durch den Eingriff eines Anwenders verursacht wird, falls die Beendigung der Medienoperation durch den Eingriff des Anwenders verursacht wird, ein Medienoperationsbeendigungsereignis und einen "End Key"-Parameter, ek-Parameter, des Ereignisses zu der MGC zu berichten, wobei der Wert des ek-Parameters des Ereignisses eine Mehrfrequenzwahlverfahren-Tasteneingabe, DTMF-Tasteneingabe durch den Anwender ist, wenn der Anwender in die Medienoperation eingreift; wobei der Parameter in dem Medienoperationsbeendigungsereignis geführt ist; und falls die Beendigung der Medienoperation nicht durch den Eingriff eines Anwenders verursacht wird, ein Medienoperationsbeendigungsereignis und keinen ek-Parameter des Ereignisses zu der MGC zu berichten oder ein Medienoperationsbeendigungsereignis und einen ek-Parameter zu der MGC zu berichten, wobei der Wert des ek-Parameters Null ist, wobei sich die Medienoperation auf das Aufzeichnen oder Abspielen von Sprache bezieht; und
die MGC (301), die konfiguriert ist, das Medienoperationsbeendigungsereignis und die DTMF-Taste, die durch das MG (302) berichtet werden, zu empfangen.

6. System nach Anspruch 5, wobei die MGC (301) ferner Folgendes umfasst:
ein Sendemodul, das konfiguriert ist, die Steuerinformationen zu dem MG (302) als eine Anweisung zum Detektieren der Beendigung der Medienoperation zu senden.

7. Verarbeitungsvorrichtung, die Folgendes umfasst:
ein Erhaltemodul (501), das konfiguriert ist, Steuerinformationen, die durch eine Medien-Gateway-Steuereinheit, MGC, gesendet werden, zu erhalten, wobei die Steuerinformationen eine Anweisung zum Detektieren der Beendigung einer Medienoperation sind, wobei sich die Medienoperation auf das Aufzeichnen oder Abspielen von Sprache bezieht;
ein Detektionsmodul (502), das konfiguriert ist, gemäß den Steuerinformationen, die durch das Erhaltemodul (501) erhalten werden, zu detektieren, ob die Medienoperation beendet ist;
ein Beurteilungsmodul (504), das konfiguriert ist zu beurteilen, ob die Beendigung der Medienoperation durch einen Eingriff eines Anwenders verursacht ist, wenn das Detektionsmodul (502) detektiert, dass die Medienoperation beendet ist; und
ein Berichtsmodul (505), das konfiguriert ist, ein Medienoperationsbeendigungsereignis und einen "End Key"-Parameter, ek-Parameter, des Ereignisses zu der MCG zu berichten, wenn das Beurteilungsmodul (504) bestimmt, dass die Beendigung der Medienoperation durch den Eingriff eines Anwenders verursacht ist, wobei der Wert des ek-Parameters des Ereignisses eine Mehrfrequenzwahlverfahren-Tasteneingabe, DTMF-Tasteneingabe, durch den Anwender ist, wenn der Anwender in die Medienoperation eingreift; wobei der Parameter in dem Medienoperationsbeendigungsereignis geführt ist; und ein Medienoperationsbeendigungsereignis und keinen ek-Parameter des Ereignisses zu der MGC zu berichten oder ein Medienoperationsbeendigungsereignis und einen ek-Parameter zu der MGC zu berichten, falls das Beurteilungsmodul (504) bestimmt, dass die Beendigung der Medienoperation nicht durch den Eingriff des Anwenders verursacht wird, wobei der Wert des ek-Parameters Null ist;
wobei die Verarbeitungsvorrichtung ein Medien-Gateway, MG, ist.

8. Verarbeitungsvorrichtung nach Anspruch 7, die ferner Folgendes umfasst:
ein Ausführungsmodul (503), das konfiguriert ist, die Medienoperation, die durch die Steuerinformationen angegeben ist, auszuführen.

## Revendications

1. Procédé de signalement d'informations d'opérations multimédia comprenant :
la réception, par une Passerelle Multimédia, MG (Media Gateway), d'informations de commande envoyées par un Contrôleur de Passerelle Multimédia, MGC (Media Gateway Controller), dans lequel les informations de commande sont une instruction de détection d'achèvement d'une opération multimédia, et l'opération multimédia désigne l'enregistrement ou la reproduction d'une voix ;
la détection, par la MG, du fait de savoir si l'opération multimédia est achevée conformément aux informations de commande ;
lorsque la MG détecte que l'opération multimédia est achevée, le jugement, par la MG, du fait de savoir si l'achèvement de l'opération multimédia est provoqué par l'intervention d'un utilisateur ;
si l'achèvement de l'opération multimédia est provoqué par l'intervention de l'utilisateur, le signalement, par la MG, d'un événement d'achèvement de l'opération multimédia et d'un paramètre "Touche de Fin", ek (End Key), de l'événement au MGC, dans lequel la valeur du paramètre "Touche de Fin" de l'événement est une touche multifréquence à deux tonalités, DTMF (Dual Tone Multiple Frequency), fournie en entrée par l'utilisateur lorsque l'utilisateur intervient dans l'opération multimédia ; dans lequel le paramètre est acheminé dans l'événement d'achèvement de l'opération multimédia ; et
si l'achèvement de l'opération multimédia n'est pas provoqué par l'intervention de l'utilisateur, le signalement, par la MG, d'un événement d'achèvement de l'opération multimédia et d'aucun paramètre ek d'événement au MGC, ou le signalement, par la MG, d'un événement d'achèvement de l'opération multimédia et d'un paramètre ek au MGC, dans lequel la valeur du paramètre ek est nulle.

2. Procédé selon la revendication 1, dans lequel :
les informations de commande comprennent un événement d'un protocole de commande de passerelle.

3. Procédé selon la revendication 2, dans lequel :
les informations de commande sont appliquées à un flux ou à une terminaison, et la terminaison est une terminaison spécifique dans la MG ou une terminaison racine représentative de l'ensemble de la MG.

4. Procédé selon la revendication 1, dans lequel :
les informations de commande sont générées conformément à des informations de demande de l'utilisateur ou à la touche DTMF fournie en entrée par l'utilisateur.

5. Système de signalement d'informations d'opérations multimédia, comprenant :
une Passerelle Multimédia, MG (302), configurée pour : obtenir des informations de commande envoyées par un Contrôleur de Passerelle Multimédia, MGC (301), dans lequel les informations de commande sont une instruction de détection d'achèvement d'une opération multimédia, détecter si l'opération multimédia est achevée conformément aux informations de commande ; lorsque la MG détecte que l'opération multimédia est achevée, juger si l'achèvement de l'opération multimédia est provoqué par l'intervention d'un utilisateur, si l'achèvement de l'opération multimédia est provoqué par l'intervention de l'utilisateur, signaler un événement d'achèvement de l'opération multimédia et un paramètre "Touche de Fin", ek, de l'événement au MGC, dans lequel la valeur du paramètre ek de l'événement est une touche multifréquence à deux tonalités, DTMF, fournie en entrée par l'utilisateur lorsque l'utilisateur intervient dans l'opération multimédia ; dans lequel le paramètre est acheminé dans l'événement d'achèvement d'opération multimédia ; et si l'achèvement de l'opération multimédia n'est pas provoqué par l'intervention de l'utilisateur, signaler un événement d'achèvement de l'opération multimédia et aucun paramètre ek de l'événement au MGC, ou signaler un événement d'achèvement de l'opération multimédia et un paramètre ek au MGC, dans lequel la valeur du paramètre ek est nulle, dans lequel l'opération multimédia désigne l'enregistrement ou la reproduction d'une voix ; et
le MGC (301), configuré pour recevoir l'événement d'achèvement de l'opération multimédia et la touche DTMF signalés par la MG (302).

6. Système selon la revendication 5, dans lequel le MGC (301) comprend en outre :
un module d'envoi, configuré pour envoyer les informations de commande à la MG (302) en tant qu'instruction de détection d'achèvement de l'opération multimédia.

7. Dispositif de traitement, comprenant :
un module d'obtention (501), configuré pour obtenir des informations de commande envoyées par un Contrôleur de Passerelle Multimédia, MGC, dans lequel les informations de commande sont une instruction de détection de l'achèvement d'une opération multimédia, dans lequel l'opération multimédia désigne l'enregistrement ou la reproduction d'une voix ;
un module de détection (502), configuré pour détecter si l'opération multimédia est achevée conformément aux informations de commande obtenues par le module d'obtention (501) ;
un module de jugement (504), configuré pour juger si l'achèvement de l'opération multimédia est provoqué par l'intervention d'un utilisateur lorsque le module de détection (502) détecte que l'opération multimédia est achevée ; et
un module de signalement (505), configuré pour signaler un événement d'achèvement de l'opération multimédia et un paramètre "Touche de Fin", ek, de l'événement au MGC si le module de jugement (504) détermine que l'achèvement de l'opération multimédia est provoqué par l'intervention de l'utilisateur, dans lequel la valeur du paramètre ek de l'événement est une touche multifréquence à deux tonalités, DTMF, fournie en entrée par l'utilisateur lorsque l'utilisateur intervient dans l'opération multimédia ; dans lequel le paramètre est acheminé dans l'événement d'achèvement de l'opération multimédia ; et signaler un événement d'achèvement de l'opération multimédia et aucun paramètre ek de l'événement au MGC, ou signaler un événement d'achèvement de l'opération multimédia et un paramètre ek au MGC si le module de jugement (504) détermine que l'achèvement de l'opération multimédia n'est pas provoqué par l'intervention de l'utilisateur, dans lequel la valeur du paramètre ek est nulle ;
dans lequel le dispositif de traitement est une passerelle multimédia, MG.

8. Dispositif de traitement selon la revendication 7, comprenant en outre :
un module d'exécution (503), configuré pour effectuer l'opération multimédia indiquée par les informations de commande.
